# EUROPÄISCHE PATENTSCHRIFT

(11) **EP 2 638 298 B1**
(45) Veröffentlichungstag und Bekanntmachung des Hinweises auf die Patenterteilung: **06.05.2015**
(21) Anmeldenummer: 11791227.9
(22) Anmeldetag: 08.11.2011
(51) Int. Cl.: F16B 37/00

(54) **GEWINDEERZEUGENDE MUTTER, ROHTEIL ZUR HERSTELLUNG DER MUTTER UND SCHRAUBVERBINDUNG AUS MUTTER UND BOLZEN**
THREAD-PRODUCING NUT, BLANK FOR MANUFACTURING THE NUT AND SCREWED CONNECTION COMPOSED OF NUT AND BOLT
ÉCROU AUTO-FILETEUR, ÉLÉMENT TUBULAIRE POUR LA FABRICATION DE L'ÉCROU ET ASSEMBLAGE VISSÉ COMPOSÉ D'UN ÉCROU ET D'UN BOULON

(30) Priorität: 08.11.2010 DE 102010043589
(43) Veröffentlichungstag der Anmeldung: 18.09.2013
(73) Patentinhaber: Baier & Michels GmbH und Co. KG, 64372 Ober-Ramstadt (DE)
(72) Erfinder: AMBROS, Olaf, 68647 Biblis (DE)
(74) Vertreter: Sommer, Peter
(86) Internationale Anmeldenummer: PCT/EP2011/069601
(87) Internationale Veröffentlichungsnummer: WO 2012/062728

(56) Entgegenhaltungen:
- EP-A1- 0 354 446
- EP-A1- 0 554 094

## Beschreibung

### Technisches Gebiet

Die Erfindung betrifft eine gewindeerzeugende Mutter für eine Schraubverbindung, wobei zur form- und kraftschlüssigen sowie lösbaren Verbindung mit einem insbesondere zylindrischen Bolzen oder Zapfen ein mit Gewindegängen versehenes Kernloch vorgesehen ist. Darüber hinaus ist ein Rohteil oder Rohling zur Herstellung der Mutter und eine Schraubverbindung aus einer solchen Mutter und einem Bolzen Gegenstand der Erfindung.

### Stand der Technik

Gewöhnliche Muttern weisen ein Kernloch auf, in der mehrere Gewindegänge angeordnet sind, sodass die Mutter auf die Gewindegänge auf einen mit einem entsprechenden Gegengewinde versehenen Bolzen aufgeschraubt werden kann. Die Mutter wird beispielsweise zum Verspannen eines Bauteils über diese Schraubverbindung verwendet.

Zur Verbesserung der Sicherung der Mutter gegen selbsttätiges Lösen ist es aus der DE 296 14 832 U1 bekannt, dass ein Bolzen, der ein selbstschneidendes oder selbstfurchendes Gewinde aufweist, in eine vorzugsweise gewindelose Mutter ein Gewinde schneidet bzw. formt und umgekehrt. Ist das Gegenstück, also zum Beispiel die Mutter, bereits mit einem Gewinde versehen, wird dieses durch das selbstschneidende Gewinde des Bolzens noch weiter spanend bearbeitet. Bei einem selbstfurchenden Gewinde, zum Beispiel in Form eines trilobularen Gewindes, formt dieses das gegebenenfalls vorhandene Gewinde des Gegenstücks weiter aus oder verformt es nur elastisch. In jedem Fall wird durch das Schneiden, Formen oder elastische Verformen eine Sicherung der Mutter gegen selbsttätiges Lösen geschaffen.

Aus der gattungsgemäßen WO2006/117140A2 ist eine gewindefurchende Mutter zur Form - und kraftschlüssigen sowie lösbaren Verbindung mit einem zylindrischen Lagerzapfen bzw. Zapfen bekannt, wobei die Gewindebohrung im Querschnitt die Form eines Polygons mit drei oder mehr nach innen abgerundeten Formstegen aufweist. Die Gewindebohrung der gewindefurchenden Mutter kann im Querschnitt eine trilobulare Form aufweisen, wobei das Gewinde derselben mit einer Radiusprofilierung versehen sein kann. Über die Wahl des Durchmessers des Verschraubungsabschnittes und dem gemäß des Gewindes der gewindefurchenden Mutter besteht dadurch die Möglichkeit, auf die Belastbarkeit bzw. Sicherheit der Schraubverbindung mit einfachen Maßnahmen Einfluss zu nehmen. Die gewindefurchende Mutter kann dabei aus Werkzeugstahl bestehen, sodass eine Materialpaarung aus einem harten und einem weichen Partner zum Gewindefurchen gegeben ist.

Bei mit einem Beschichtungsmedium zugesetzten Gewindegängen eines Bolzens wird die Funktion einer solchen Mutter durch das Beschichtungsmedium eingeschränkt oder sogar vollständig verhindert. Dies gilt insbesondere bei durch Tauchverfahren aufgebrachte Beschichtungen, die prozessbedingt durch eine meist einseitig besonders stark ausgeprägte Ablagerung des Beschichtungsmediums im Gewinde gekennzeichnet sind. Es ist daher im Stand der Technik erforderlich, das Gewinde des beschichteten Bolzens frei zu schaben oder das Gewinde nachzuschneiden. Gelegentlich wird auch versucht, durch die Verwendung einer Mutter in einer deutlich höheren Toleranzklasse Abhilfe zu schaffen, jedoch führt dies bei entsprechend starken Ablagerungen zu einem Fressen oder einem unkontrolliert hohen Drehmoment beim Aufschrauben der Mutter auf den mit dem Gewinde versehenen Bolzen.

### Offenbarung der Erfindung

Die mit der Erfindung zu lösende technische Aufgabe besteht darin, eine Mutter bereitzustellen, die aufgrund Ihrer speziellen Ausprägung des Gewindes die Eignung besitzt, auf glatte Bolzen entsprechenden Querschnitts ein voll funktionsfähiges Gewinde zu formen oder aber bereits vorhandene Gewinde, die durch ein Beschichtungsmedium zugesetzt wurden, mit vertretbarem Kraftaufwand frei zu schaben.

Eine erfindungsgemäße gewindeerzeugende Mutter zur form-und kraftschlüssigen sowie lösbaren Verbindung mit einem insbesondere zylindrischen Zapfen oder Bolzen, wobei ein mit tragenden Gewindegängen versehenes Kernloch vorgesehen ist und wobei die Gewindegänge an einer Umfangsfläche des Kernlochs in Umfangsrichtung angeordnet sind, weisen die Gewindegänge in Umfangsrichtung gesehen abschnittsweise vollständig ausgebildete Gewindegänge auf und sind zwischen den vollständig ausgebildeten Abschnitten der Gewindegänge Freiräume mit in ihrer Höhe unvollständig ausgebildeten Gewindegängen vorgesehen.

Ein vollständig ausgebildeter Gewindegang besteht aus einer scharfkantigen Spitze, Gewindeflanken und einem Gewindegrund. Ein nur unvollständig ausgebildeter Gewindegang im Sinne der vorliegenden Erfindung weist einen Gewindegrund und Gewindeflanken auf, die aber nicht zu einer Spitze zusammenlaufen, sondern in einen abgeflachten Bereich übergehen. Dieser abgeflachte Bereich stellt im Vergleich zu einer Spitze einen Freiraum dar.

Diese Mutter ist in der Lage, vorhandene Gewindeteile an beschichteten Baugruppen, deren Funktion durch das Beschichtungsmedium eingeschränkt oder nicht mehr vorhanden ist frei zu schaben und somit den einen zusätzlichen kostenintensiven Arbeitsgang wie z.B. das Nachschneiden des Gewindes oder das aufwendige Abdecken der Gewindeteile vor dem Beschichten einzusparen.

Eine derartige Mutter ist weiterhin in der Lage, auf Bolzen aus den unterschiedlichsten Werkstoffen wie z.B. NE-Metallen oder Stahl ein lehrenhaltiges und voll belastbares Gewinde ohne Spanabnahme zu formen, wobei in der Regel ein metrisches Gewinde geschaffen werden soll.

Vorteilhafterweise können die tragenden Gewindegänge in dem Kernloch mit ihrem Gewindegrund auf einem Gewindeaußendurchmesser Dn und mit ihren Spitzen auf einem Gewindeinnendurchmesser D1 liegen und können die Gewindegänge zumindest teilweise das Kernloch vom Gewindeinnendurchmesser D1 her in Richtung zum Gewindeaußendurchmesser Dn hin erweiternde Freiräume aufweisen, wobei die Freiräume in einem Abstand zum Gewindeaußendurchmesser Dn auf einem Außenkreisdurchmesser Da enden.

Durch diesen Abstand ist es möglich, auch im Bereich der Freiräume noch auf die Ausbildung eines Gewindes am Bolzen einzuwirken, indem die Spitzen des zu erzeugenden Gewindes geglättet und kalibriert werden können.

Vorteilhafterweise können die Gewindegänge einen Gewindeflankendurchmesser D2 aufweisen, der zwischen dem Gewindeaußendurchmesser Dn und dem Gewindeinnendurchmesser D1 liegt und kann der Außenkreisdurchmesser Da kleiner als der Gewindeaußendurchmesser Dn und mindestens so groß wie der Gewindeflankendurchmesser D2 sein.

Diese Ausgestaltung stellt einen guten Kompromiss bei der Gestaltung der Freiräume dar.

Weiterhin können die Freiräume als Kreisbogen mit einem Radius Rv ausgebildet sein und kann der Radius Rv kleiner als 35% des Gewindeinnendurchmessers D1 und insbesondere kleiner als 25% des Gewindeinnendurchmesser D1 ausgebildet sein, wobei der Freiraum ein Zentrum aufweist, das zu einem Zentrum des Kernlochs um höchstens 75% des Gewindeinnendurchmessers D1 beabstandet ist.

Anstelle eines Kreisbogens kann auch ein anderer Verlauf gewählt werden, solange ein Abstand zum Gewindeaußendurchmesser Dn eingehalten wird.

Vorteilhafterweise kann der Übergang eines Freiraums zum Gewindeinnendurchmesser D1 unter einem Winkel von 120° bis kleiner als 180° erfolgt, insbesondere von 150° bis weniger als 180°.

Wenn der Anteil der Freiräume an den Gewindegängen zwischen 20% und 75% beträgt, kann einerseits ausreichend auf eine Tragfähigkeit des Gewindes und andererseits auf eine ausreichende Ausweichmöglichkeit für verformtes Material geachtet werden.

Ein weiterer Gegenstand der Erfindung ist eine Schraubverbindung, umfassend eine Mutter und einen Bolzen, wobei der Durchmesser d2 des Bolzens größer als der Gewindeinnendurchmesser D1 und kleiner als der Außenkreisdurchmesser Da der Mutter ist und insbesondere so groß wie der Gewindeflankendurchmesser D2.

Vorteilhafterweise kann der Außenkreisdurchmesser Da der Mutter größer als der Durchmesser d2 des Bolzens sein.

Die so entstandene Schraubverbindung verfügt über einen hohen Selbsthemmungseffekt, welcher ähnlich wie bei gewindefurchenden Schrauben durch die elastische Rückfederung des Materials bei der Umformung hervorgerufen wird und so einem selbständigen Lösen der Verbindung z.B. durch Vibrationen entgegenwirkt.

Noch ein weiterer Gegenstand der Erfindung besteht in einem Rohteil für die Herstellung einer gewindeerzeugende Mutter, wobei die herzustellende Mutter mit einem Gewinde mit einem Gewindeinnendurchmesser D1 und mit einem Gewindeaußendurchmesser Dn zu versehen ist, in dem das Rohteil ein Kernloch mit einem Innenkreisdurchmesser Di kleiner als der herzustellende Gewindeinnendurchmesser D1 aufweist und das Kernloch vom Innenkreisdurchmesser Di her das Kernloch erweiternde Freiräume aufweist, wobei die Freiräume in einem Abstand zum herzustellenden Gewindeaußendurchmesser Dn auf einem Außenkreisdurchmesser Da enden.

Aus einem derartigen Rohteil lässt sich eine erfindungsgemäße Mutter durch Schneiden eines Gewindes herstellen.

Vorteilhafterweise können die Freiräume zu einander beabstandet sein, obgleich es auch möglich ist, dass die im Rohteil vorliegenden Freiräume aneinander anstoßen.

### Kurze Beschreibung der Zeichnungen

Das erfindungsgemäße Verfahren wird anhand der Zeichnung erläutert. Es zeigen:
- Fig. 1: einen Rohling für eine Mutter mit einem herzustellenden Gewinde mit Gewindegängen nach dem Stand der Technik;
- Fig. 2: den Rohling aus Fig. 1, wobei ein Kernloch mit einem Innendurchmesser Di mit dem Radius Ri eingebracht ist;
- Fig. 3: den Rohling aus Fig. 2 mit einer ersten Veränderung der Kernlochgeometrie;
- Fig. 4: den Rohling aus Fig. 3 mit einer weiteren Veränderung der Kernlochgeometrie;
- Fig. 4A: ein Detail X des Rohlings aus Fig. 4;
- Fig. 4B: ein Detail Y des Rohlings aus Fig. 4;
- Fig. 5: eine aus dem Rohling aus Fig. 4 mit noch einer weiteren Veränderung der Kernlochgeometrie entstandene erfindungsgemäße Mutter;
- Fig. 6: Schnitt I-I aus Fig. 5 mit Einlaufschräge und voll ausgebildeten, scharfkantigen Gewindespitzen;
- Fig. 7: Schnitt II-II aus Fig. 5 "Restnut" zum Kalibrieren der Spitzen des Bolzens.

### Ausführungsform der Erfindung

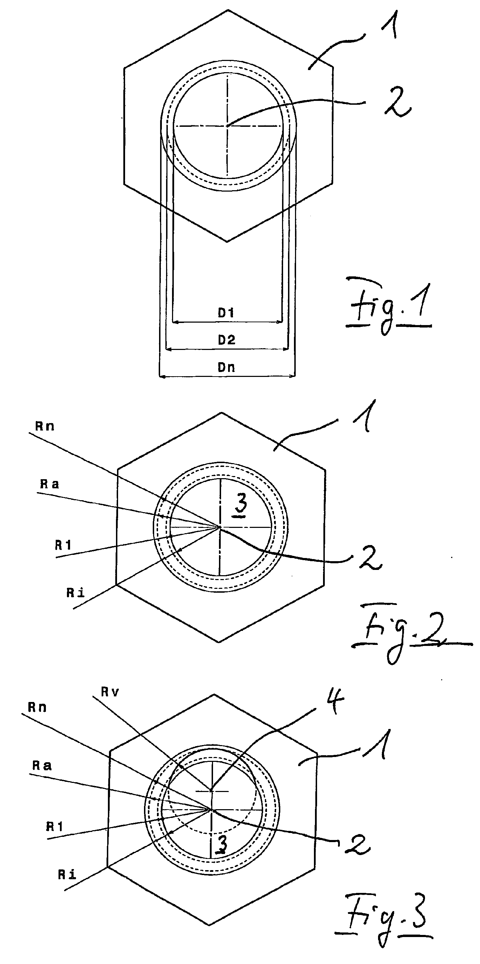

Fig. 1 zeigt einen Rohling 1 für eine Mutter mit einem noch herzustellenden Gewinde mit Gewindegängen nach dem Stand der Technik, etwa ausgebildet als ein metrisches Gewinde nach DIN 336, wobei die gedachten Gewindegänge zwischen einem Gewindeaußendurchmesser Dn mit dem Radius Rn, nach der ISO auch als Normdurchmesser bezeichnet und einem Gewindeinnendurchmesser D1 mit dem Radius R1, nach der ISO auch als Kerndurchmesser des Mutterngewindes bezeichnet, liegen, die als durchgezogene Kreise um ein gemeinsames Zentrum 2 dargestellt sind. Den Durchmessern Dn, D1 mit sind die nicht dargestellten Radien Rn und R1 zugeordnet und im folgenden wird in der Bezeichnung zwischen den Radien und den Durchmessern nicht weiter unterschieden und es wird je nach dem diejenige Bezeichnung verwendet, die für die Erläuterung der Erfindung für besser erachtet wird. Dies gilt auch für weitere Durchmesser und Radien der nachfolgenden Figuren.

Weiterhin angegeben ist ein Flankendurchmesser D2 mit einem Radius R2 für das herzustellende Gewinde der Mutter. Dieser Durchmesser ist für die Bemessung des Bolzens oder Zapfens, auf den die Mutter aufgebracht werden soll, von Bedeutung und wird im Zusammenhang mit Fig. 8 erläutert werden.

Fig. 2 zeigt den Rohling 1 für eine Mutter aus Fig. 1, wobei ein Kernloch 3 mit einem Innendurchmesser Di mit dem Radius Ri eingebracht wurde, etwa durch Bohren, Stanzen oder Umformen. Der Innendurchmesser Di mit dem Radius Ri des Kernlochs 3 ist kleiner als der herzustellende Gewindeinnendurchmesser D1 mit dem Radius R1. Zwischen dem herzustellenden Gewindeaußendurchmesser Dn mit dem Radius Rn und dem herzustellende Gewindeinnendurchmesser D1 mit dem Radius R1 ist ein Außendurchmesser Da mit dem Radius Ra als strichpunktierter Kreis um das Zentrum 2 angegeben, der für die Ausgestaltung der erfindungsgemäßen Mutter eine besondere Bedeutung hat.

Nicht dargestellt ist der Flankendurchmesser D2 aus Fig. 1 und Fig. 8 mit dem Radius R2, der aber zwischen dem Gewindeinnendurchmesser D1 mit dem Radius R1 und dem Außendurchmesser Da mit dem Radius Ra liegt.

Insgesamt gilt also Dn > Da > D2 > D1 > Di und entsprechend Rn > Ra > R2 > R1 > Ri.

In Fig. 3 ist der Rohling aus Fig. 2 mit einer ersten Veränderung der Kernlochgeometrie dargestellt, die eine verrundete Freimachung mit einem Radius Rv und mit einem Zentrum 4 in einem Abstand zu dem Zentrum 2 des Kernlochs 3 aufweist. Diese Veränderung ist beispielsweise dadurch entstanden, dass das Kernloch 2 mit einem Fräser mit einem Fräserumkreis Rv und mit einem Drehzentrum 4 aus Fig. 2 ausgeweitet wurde.

Dabei ist die Freimachung Rv kleiner als der Innendurchmesser Di mit dem Radius RI, vorzugsweise beträgt Rv etwa die Hälfte von Ri und das Drehzentrum 4 ist zu dem Zentrum 2 so beabstandet, dass die Freimachung bis zu dem Außendurchmesser Da mit dem Radius Ra reicht und noch einen Abstand zu dem herzustellenden Gewindeaußendurchmesser Dn mit dem Radius Rn aufweist. Bereits hier ist zu erkennen, dass im Bereich der Freimachung Rv der herzustellende Gewindeinnendurchmesser D1 mit dem Radius R1 unterschritten wurde.

Auch zur spanenden Herstellung alternative Verfahren können eingesetzt werden, so kann insbesondere das Kernloch durch Umformen hergestellt werden. Dabei kann bei geeigneter Geometrie des Umformwerkzeugs die gewünschte Geometrie des Kernlochs bereitgestellt werden. Derartige Umformungen sind aus dem Stand der Technik zur Herstellung von Muttern grundsätzlich bekannt.

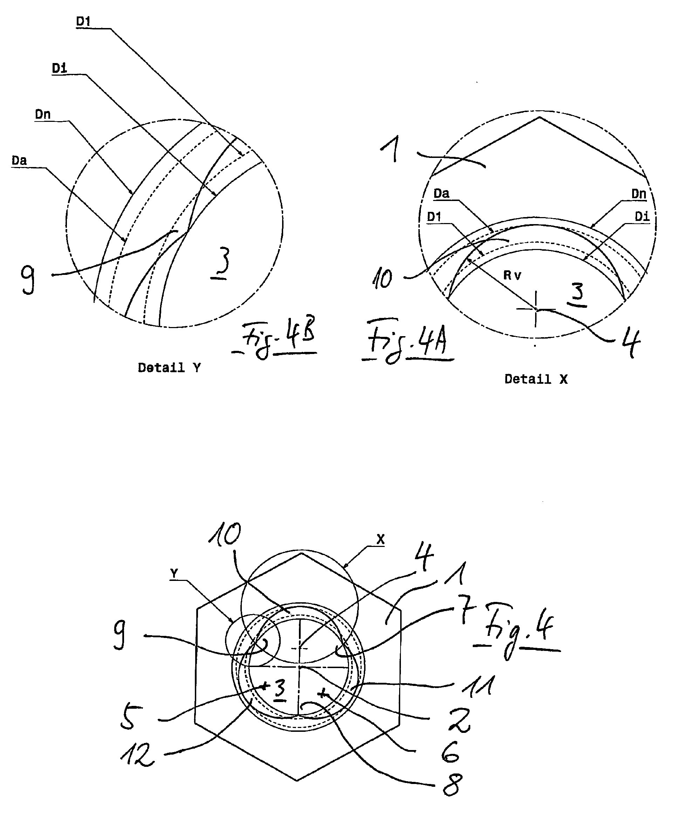

In Fig. 4 ist der Rohling aus Fig. 3 mit einer weiteren Veränderung der Kernlochgeometrie dargestellt, die dadurch entstanden ist, dass weitere Freimachungen vorgenommen wurden. Dabei ist das Drehzentrum 5 und 6 ebenfalls so zu dem Zentrum 2 beabstandet, dass die Freimachung wieder bis zu dem Außendurchmesser Da mit dem Radius Ra reicht und noch einen Abstand zu dem herzustellenden Gewindeaußendurchmesser Dn mit dem Radius Rn aufweist.

Die Herstellung erfolgt beispielsweise mit dem Fräser mit einem Fräserumkreis Rv zusätzlich zu dem Drehzentrum 4 noch um zwei weitere Drehzentren 5 und 6.

Es ist nun zu erkennen, dass nach wie vor Bereiche 7, 8, 9 des Kernlochs aus Fig. 2 vorhanden sind, die also über den herzustellende Gewindeinnendurchmesser D1 mit dem Radius R1 bis zu dem Innendurchmesser Di mit dem Radius Ri reichen. In der Detaildarstellung Y des Bereichs 9 aus Fig. 4 ist in der Fig. 4B dessen Lage bezüglich der verschiedenen Durchmesser Di, D1, Da und Dn mit dem jeweiligen Radius RI, R1, Ra und Rn genau zu erkennen, wobei die Durchmesser vom Inneren des Kernlochs 3 nach außen hin angegeben sind.

Weiter ist in Fig. 4 zu erkennen, dass Bereiche 10, 11, 12 des Kernlochs vorhanden sind, die gegenüber dem herzustellende Gewindeinnendurchmesser D1 mit dem Radius R1 bis zu dem Außendurchmesser Da mit dem Radius Ra reichen, wobei der Bereich 10 bereits in Fig. 3 entstanden war. In der Detaildarstellung X des Bereichs 10 aus Fig. 4 ist in der Fig. 4A dessen Lage bezüglich der verschiedenen Durchmesser Di, D1, Da und Dn mit dem jeweiligen Radius Ri, R1, Ra und Rn genau zu erkennen, wobei die Durchmesser wieder vom Inneren des Kernlochs 3 nach außen hin angegeben sind. Darüber hinaus ist das Zentrum 4 und die Freimachung mit einem Radius Rv angegeben, mit denen der Bereich 10 hergestellt ist.

Obgleich die Freiräume 10-12 aneinander angrenzen, können sie auch so ausgebildet sein, dass Zwischenräume mit unverändertem Innenkreisdurchmesser Di vorhanden sind. Der Gestaltungsspielraum ist hier sehr weit.

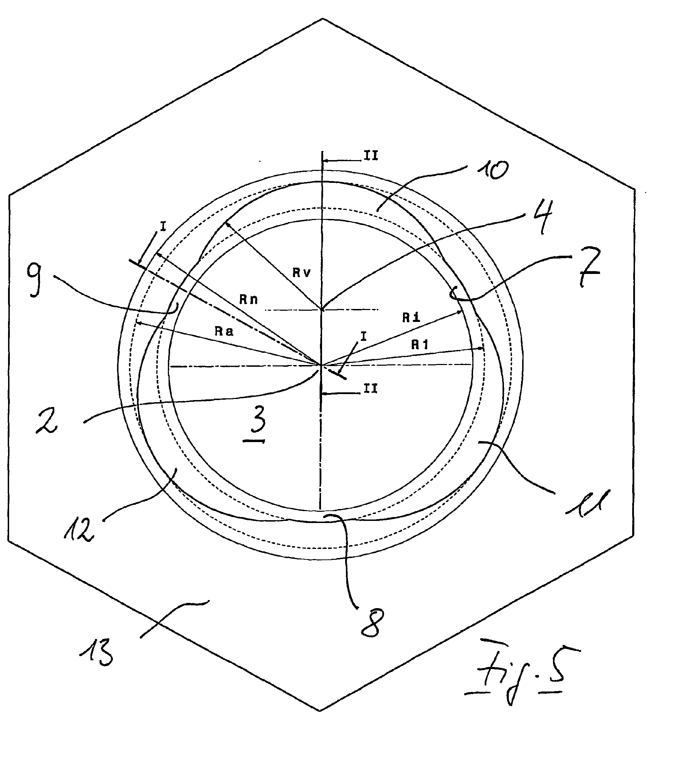

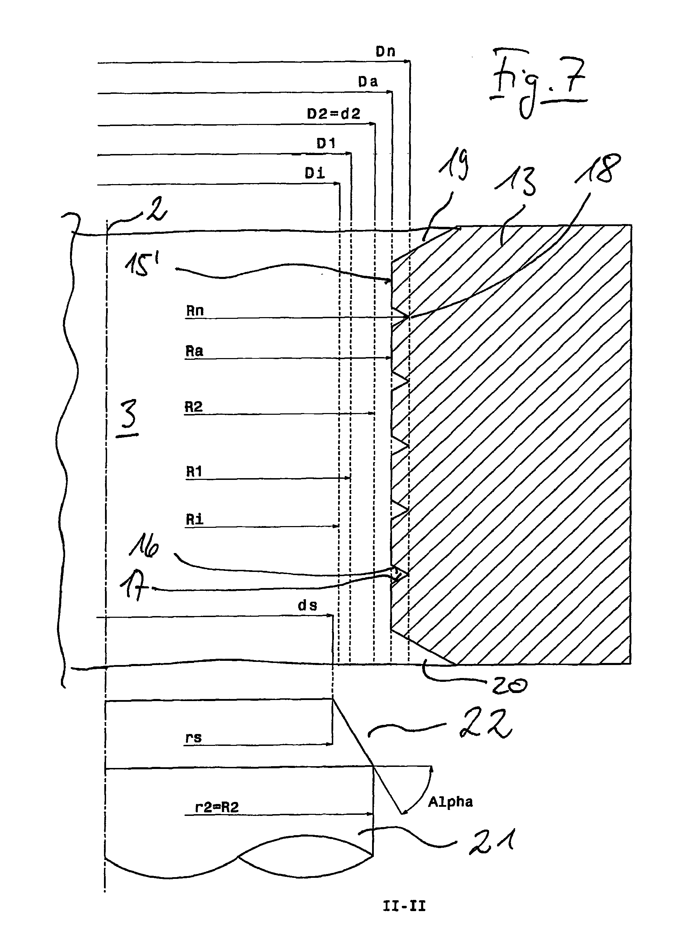

In Fig. 5 ist der Rohling aus Fig. 4 mit noch einer weiteren Veränderung der Kernlochgeometrie dargestellt, die dadurch entstanden ist, dass beim Schneiden des Gewindes mit einem Gewindeschneider alle Bereiche 7, 8, 9 aus Fig. 4 vom Innendurchmesser Di mit dem Radius Ri bis auf den nun hergestellten Gewindeinnendurchmesser D1 mit dem Radius R1 gekürzt wurden, sodass in diesen Bereichen 7, 8, 9 nun eine Spitze eines vollständigen, scharfkantigen Gewindegangs liegt, siehe dazu später Fig. 7 zum Schnitt I-I. Darüber hinaus wurde beim Schneiden des Gewindes der Gewindeaußendurchmesser Dn mit dem Radius Rn und somit eine erfindungsgemäße Mutter 13 hergestellt.

Zwischen den auf dem Gewindeinnendurchmesser D1 mit dem Radius R1 liegenden Bereichen 7, 8, 9, befinden sich die Bereiche 10, 11, 12, die als Freiraum bis zum Außendurchmesser Da mit dem Radius Ra angesehen werden können. Wegen dieser gegenüber dem Kerndurchmesser D1 zurückversetzten Freiräume in den Bereichen 10, 11, 12 werden die Bereiche 7, 8, 9 als Vorsprünge wahrgenommen, obwohl sie eigentlich den auf dem Kerndurchmesser D1 liegenden Gewindespitzen eines Gewindes nach dem Stand der Technik entsprechen.

Weiterhin sind der Freiraum des Bereichs 10 und der Vorsprung des Bereichs 7 der Mutter 13 aus Fig. 5 im Detail dargestellt. Zu erkennen sind das Zentrum 2 des Kernlochs 3, das demgegenüber verschobene Zentrum 4 zur Herstellung des Freiraums bis zum Außendurchmesser Da mit dem Radius Ra im Bereich 10 mit einem Durchmesser Rv und der auf dem Gewindeinnendurchmesser D1 mit dem Radius R1 liegenden Vorsprung im Bereich 7. Sowohl im Bereich 7 als auch im Bereich 10 erstreckt sich das Gewinde bis zu dem Gewindeaußendurchmesser Dn mit dem Radius RD. Der Innendurchmesser Di mit dem Radius Ri des Rohlings aus den Fig. 2 bis 4 hat in der so hergestellten Mutter keine gegenständliche Entsprechung mehr und ist nur der Vollständigkeit halber angegeben.

Der Winkel am Übergang des Bereichs 9 zur Freimachung 10 beträgt etwa 170° gemessen im Material der Mutter.

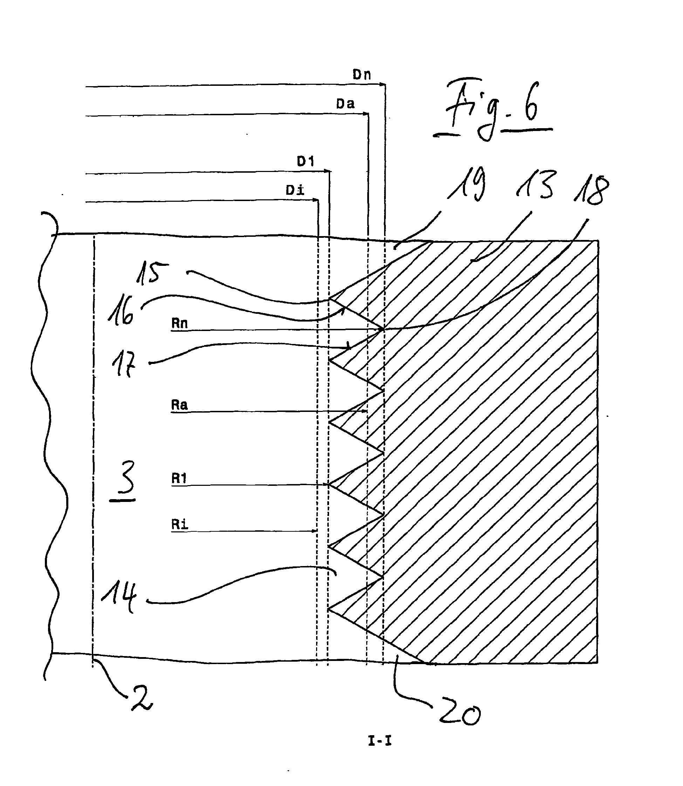

In Fig. 6 ist ein Schnitt I-I aus Fig. 5 durch den Bereich 9 dargestellt. Die Mutter 13 weist hier im Kernloch 3 ein Gewinde 14 mit mehreren Gewindegängen auf, die aus einer den Kernloch zugewandten Gewindespitze 15, aus Gewindeflanken 16, 17 und aus einem Gewindegrund 18 bestehen. Die Gewindespitzen 15 sind voll ausgebildet und scharfkantig und liegen auf dem Gewindeinnendurchmesser D1 mit dem Radius R1, nach der ISO auch als Kerndurchmesser des Mutterngewindes bezeichnet. Die Gewindegründe 18 liegen auf einem Gewindeaußendurchmesser Dn mit dem Radius Rn, nach der ISO auch als Normdurchmesser bezeichnet.

Die Mutter 13 ist darüber hinaus auf der Ober- und Unterseite mit Einlaufschrägen 19, 20 versehen, um das Anbringen an einem Bolzen oder Zapfen zu erleichtern.

In Fig. 7 ist ein Schnitt II-II aus Fig. 5 durch den Bereich 10 dargestellt. Das Gewinde 14 weist mehrere Gewindegänge auf, deren dem Kernloch zugewandten Gewindespitzen 15' nur unvollständig und im wesentlichen flach ausgebildet sind, wobei gleichwohl noch stets Gewindeflanken 16, 17 zu dem Gewindegrund 18 hin bestehen. Die Gewindespitzen 15' liegen auf dem Außendurchmesser Da mit dem Radius RA. Die Gewindegründe 18 liegen auf einem Gewindeaußendurchmesser Dn mit dem Radius Rn, nach der ISO auch als Normdurchmesser bezeichnet.

Der Flankendurchmesser D2 mit Radius R2 entspricht dem Außendurchmesser d2 eines Bolzens 21. Der Bolzen 21 hat eine Einfügeschräge 22 mit einem Winkel Alpha von etwa 60° und an der Spitze einen kleinsten Durchmesser ds mit einem Radius rs, der kleiner als der Gewindeinnendurchmesser D1 ist. Beim reinen Furchen von Gewinden wird so ein gerades Ansetzen der Mutter erleichtert.

Weiterhin verfügt die Mutter 13 auf beiden Seiten, mindestens aber auf der dem zu klemmenden Bauteil zugewandten Seite, also in der Wirkungsrichtung der Mutter über eine entsprechend starke Ansenkung 19, 20 oder einen Gewindeeinlauf, der das Ansetzen der Mutter und so auch das Furchen eines Gewindes erleichtern soll. Daher kann bei Muttern dieses Typs, die nicht lageorientiert verbaut werden und somit zwangsläufig beiderseits über eine solche Ansenkung 19, 20 verfügen, eine entsprechende Zugabe auf die Mutternhöhe gewählt werden, um eine ausreichende Belastbarkeit der Verbindung zu gewährleisten. Eine größere Mutternhöhe kann auch deswegen erwünscht sein, weil die Gewindegänge nicht über den vollen Umfang tragen und eine erhöhte Zahl von Gewindegängen bereitgestellt werden soll, um den nicht tragenden Teil des Gewindes auszugleichen.

Die vorstehend beschriebene Mutter wird vorzugsweise aus härtbarem Stahl hergestellt, wobei je nach Einsatzzweck eine Unterscheidung der Festigkeitsklasse der Mutter vorgenommen werden muss. Die Festigkeitsklasse FK 10 nach ISO 898-2 mit konventionell vergütetem Kohlenstoffstahl hat eine eingeschränkte Eignung zum Gewindeformen für weiche Werkstoffe mit einer Festigkeit Rm < 700 N/mm². Die Festigkeitsklasse FK 14 mit einer Härte von 430-470 HV10 aus beispielsweise bainitisch vergütetem Kohlenstoffstahl mit Zusätzen hat eine spezielle Eignung zum Gewindeformen auch bei höherfesten Werkstoffen mit einer Festigkeit Rm < 1100 N/mm².

Die Mutter verfügt als Rohteil vor dem Einbringen des Gewindes über eine spezielle Kernlochgeometrie, die nach Einbringen des Gewindes in den Mutternkörper definierte Freiflächen am erzeugten Gewindeprofil hinterlässt.

So entspricht der Kernlochquerschnitt dem eines Kleeblattes, aber auch andere Formen sind möglich, wobei der umschreibende Außenkreisdurchmesser Da an den nominalen Gewindeaußendurchmesser Dn angelehnt ist und der Innenkreisdurchmesser Di sich an den nominalen Gewindeinnendurchmesser D1 mit dem Radius R1 anlehnt, diese aber jeweils unterschreitet.

Bei dem Aufsetzen der Mutter 13 auf den Bolzen 21 entsteht eine Schraubverbindung.

Der Außenkreisdurchmesser Da mit dem Radius Ra ist je nach nominalem Durchmesser der Mutter etwas größer als der Außendurchmesser d2 mit dem Radius R2 des Bolzens gewählt, um somit einerseits entsprechende Freiflächen für den Materialfluss zu schaffen, andererseits aber auch gleichzeitig noch wirksam auf die Spitzen des zu formenden Bolzengewindes zu sein. Dies gilt insbesondere für das Glätten und Kalibrieren der in den verbliebenen Gewindegründen zwischen den Durchmessern Da und Dn der Mutter am Bolzengewinde entstehenden Gewindespitzen.

Der Außendurchmesser R2 des Bolzens 21 ist aber gleichzeitig kleiner als der nominale Gewindeaußendurchmesser Dn mit dem Radius Rn der Mutter 13 und liegt in der Größenordnung des Flankendurchmessers D2 des Gewindes.

Bedingt durch den gewünschten Einsatzzweck kann der Grad der Ausweitung des Kernlochs variiert werden, so dass bei einer starken Ausweitung entsprechend größere Freiräume entstehen, was einem Freischaben zugesetzter Gewindegänge wegen der Möglichkeit der Spanaufnahme in den Freiräumen entgegenkommt. Bei einer geringeren Ausweitung wird der Anteil des tragfähigen Gewindes erhöht, was die Eignung zum Gewindeformen erhöht. Generell ist im Bezug auf den tragfähigen Gewindeanteil die Bauhöhe der Mutter den geforderten Gegebenheiten entsprechend anzupassen.

Selbstverständlich können mehr oder weniger als die dargestellten drei Freimachungen vorgesehen werden, um das Gewinde an den Einsatzzweck anzupassen.

Die erfindungsgemäße Mutter kann sowohl an gewindelosen Bolzen oder Zapfen als auch an bereits vorhandenen, beschichteten Gewinden angebracht werden und erzeugt die dafür erforderliche Gewindeverhältnisse am Bolzen durch Furchen oder Schneiden bzw. Freiräumen.

## Patentansprüche

1. Gewindeerzeugende Mutter (13) zur form - und kraftschlüssigen sowie lösbaren Verbindung mit einem insbesondere zylindrischen Zapfen oder Bolzen (21), wobei ein mit tragenden Gewindegängen (14) versehenes Kernloch (3) vorgesehen ist und wobei die Gewindegänge an einer Umfangsfläche des Kernlochs in Umfangsrichtung angeordnet sind, **dadurch gekennzeichnet, dass** die Gewindegänge (14) in Umfangsrichtung gesehen abschnittsweise vollständig ausgebildete Gewindegänge aufweisen, dass zwischen den vollständig ausgebildeten Abschnitten (7, 8, 9) der Gewindegänge Freiräume (10, 11, 12) mit in ihrer Höhe unvollständig ausgebildeten Gewindegängen vorgesehen sind und dass die tragenden Gewindegänge in dem Kernloch (3) mit ihrem Gewindegrund (18) auf einem Gewindeaußendurchmesser (Dn) und mit ihren Spitzen (15) auf einem Gewindeinnendurchmesser (D1) liegen, dass die Gewindegänge (14) zumindest teilweise das Kernloch (3) vom Gewindeinnendurchmesser (D1) her in Richtung zum Gewindeaußendurchmesser (Dn) hin erweiternde Freiräume (10, 11, 12) aufweisen, wobei die Freiräume (10, 11, 12) in einem Abstand zum Gewindeaußendurchmesser (Dn) auf einem Außenkreisdurchmesser (Da) enden.

2. Mutter (13) nach Anspruch 1, **dadurch gekennzeichnet, dass** die Gewindegänge einen Gewindeflankendurchmesser (D2) aufweisen, der zwischen dem Gewindeaußendurchmesser (Dn) und dem Gewindeinnendurchmesser (D1) liegen und dass der Außenkreisdurchmesser (Da) kleiner als der Gewindeaußendurchmesser (Dn) und mindestens so groß wie der Gewindeflankendurchmesser (D2) ist.

3. Mutter (13) nach Anspruch 1 oder 2, **dadurch gekennzeichnet, dass** die Freiräume (10, 11, 12) als Kreisbogen mit einem Radius (Rv) ausgebildet sind und dass der Radius (Rv) kleiner als 35% des Gewindeinnendurchmessers (D1) und insbesondere kleiner als 25% des Gewindeinnendurchmesser (D1) ausgebildet ist, wobei der Freiraum (10, 11, 12) ein Zentrum (4, 5, 6) aufweist, das zu einem Zentrum (2) des Kernlochs (3) um höchstens 75% des Gewindeinnendurchmessers (D1) beabstandet ist.

4. Mutter (13) nach einem der Ansprüche 1 bis 3, **dadurch gekennzeichnet, dass** der Übergang eines Freiraums (10, 11, 12) zum Gewindeinnendurchmesser (D1) unter einem Winkel von 120° bis kleiner als 180° erfolgt.

5. Mutter (13) nach einem der Ansprüche 1 bis 4, **dadurch gekennzeichnet, dass** der Anteil der Freiräume (10, 11, 12) an den Gewindegängen zwischen 20% und 75% beträgt.

6. Schraubverbindung, umfassend eine Mutter (13) nach Anspruch 2 und einem der Ansprüche 3 bis 5 und einen Bolzen (21), **dadurch gekennzeichnet, dass** der Durchmesser (d2) des Bolzens (21) größer als der Gewindeinnendurchmesser (D1) und kleiner als der Außenkreisdurchmesser (Da) der Mutter ist und insbesondere so groß wie der Gewindeflankendurchmesser (D2) ist.

7. Schraubverbindung nach Anspruch 6, **dadurch gekennzeichnet, dass** der Außenkreisdurchmesser (Da) der Mutter (13) größer als der Durchmesser (d2) des Bolzens (21) ist.

8. Rohteil (1) für die Herstellung einer gewindeerzeugenden Mutter (13) nach einem der Ansprüche 1 bis 5, wobei die herzustellende Mutter (13) mit einem Gewinde (14) mit einem Gewindeinnendurchmesser (D1) und mit einem Gewindeaußendurchmesser (Dn) zu versehen ist, **dadurch gekennzeichnet, dass** das Rohteil ein Kernloch (3) mit einem Innenkreisdurchmesser (Di) kleiner als der herzustellende Gewindeinnendurchmesser (D1) aufweist und dass das Kernloch (3) vom Innenkreisdurchmesser (Di) her das Kernloch (3) erweiternde Freiräume (10, 11, 12) aufweist, wobei die Freiräume (10, 11, 12) in einem Abstand zum herzustellenden Gewindeaußendurchmesser (Dn) auf einem Außenkreisdurchmesser (Da) enden.

9. Rohteil nach Anspruch 8, **dadurch gekennzeichnet, dass** die Freiräume (10, 11, 12) zu einander beabstandet sind.

## Claims

1. A thread-forming nut (13) for positive and non-positive and releasable connection to a stud or bolt (21), more particularly to a cylindrical stud or bolt, a core hole (3) being provided that has load-bearing thread turns (14), said thread turns being disposed on a peripheral surface of said core hole (3) in its peripheral direction, **characterized in that** regions of said thread turns (14), as regarded in the peripheral direction, comprise fully formed thread turns, that between said fully formed regions (7, 8, 9) of said thread turns there are provided free spaces (10, 11, 12) comprising incompletely formed thread turns (14) in terms of height and **in that**, that said load-bearing thread turns in said core hole (3) lie at their roots (18) on a minor thread diameter (Dn) and at their crests (15) on a major thread diameter (D1), that said thread turns (14) comprise, at least in part, free spaces (10, 11, 12) that widen said core hole (3) from said minor thread diameter (D1) towards said major thread diameter (Dn), wherein said free spaces (10, 11, 12) terminate at a distance from said major thread diameter (Dn) on an outer circle diameter (Da).

2. The nut (13) as defined in claim 1, **characterized in that** said thread turns have a pitch diameter (D2) situated between said minor thread diameter (Dn) and said major thread diameter (D1) and that said outer circle diameter (Da) is smaller than said minor thread diameter (Dn) and is at least as large as said pitch diameter (D2).

3. The nut (13) as defined in claim 1 or claim 2, **characterized in that** said free spaces (10, 11, 12) are in the form of an arc of a circle having a radius (Rv) and that said radius (Rv) is smaller than 35% of said major thread diameter (D1) and is more particularly smaller than 25% of said major thread diameter (D1), wherein said free space (10, 11, 12) comprises a center (4, 5, 6) that is displaced from a center (2) of said core hole (3) by not more than 75% of said major thread diameter (D1).

4. The nut (13) as defined in any one of claims 1 to 3, **characterized in that** the transition of a free space (10, 11, 12) to said major thread diameter (D1) occurs at an angle of from 120 ° to less than 180 °.

5. The nut (13) as defined in any one of claims 1 to 4, **characterized in that** the proportion of said free spaces (10, 11, 12) in said thread turns is between 20 % and 75 %.

6. A bolted joint, comprising a nut (13) as defined in claim 2 and in any one of claims 3 to 5 and a bolt (21), **characterized in that** the diameter (d2) of said bolt (21) is larger than said major thread diameter (D1) and smaller than said outer circle diameter (Da) of said nut and is more particularly as large as said pitch diameter (D2).

7. The bolted joint as defined in claim 6, **characterized in that** said outer circle diameter Da of said nut (13) is larger than said diameter (d2) of said bolt (21).

8. An unfinished part (1) for the fabrication of a nut (13) as defined in any one of claims 1 to 5, wherein the nut (13) to be fabricated is to be provided with a thread (14) having a major thread diameter (D1) and a minor thread diameter (Dn), **characterized in that** said unfinished part comprises a core hole (3) having an inner circle diameter (Di) smaller than said major thread diameter (D1) to be fabricated and that said core hole (3) comprises free spaces (10, 11, 12) that terminate at a distance from said minor thread diameter (Dn) to be fabricated on an outer circle diameter (Da).

9. The unfinished part as defined in claim 8, **characterized in that** said free spaces (10, 11, 12) are spaced at intervals.

## Revendications

1. Écrou générant un filet (13) pour la liaison par complémentarité de formes et adhérence des forces, ainsi que séparable, avec un tourillon ou un boulon (21) en particulier cylindrique, sachant qu'un avant-trou (3) doté de pas de filet (14) porteurs est prévu et sachant que les pas de filet sont disposés sur une surface périphérique de l'avant-trou dans le sens périphérique, **caractérisé en ce que** les pas de filet (14) présentent des pas de filet formés complètement par tronçons, vus dans le sens périphérique, que des espaces libres (10, 11, 12) avec des pas de filet formés de manière incomplète dans leur hauteur sont prévus entre les tronçons formés complètement (7, 8, 9) des pas de filet et que les pas de filet porteurs reposent dans l'avant-trou (3) par leur fond de filet (18) sur un diamètre extérieur de filet (Dn) et par leurs pointes (15) sur un diamètre intérieur de filet (D1), que les pas de filet (14) présentent des espaces libres (10, 11, 12) élargissant au moins partiellement l'avant-trou (3) du diamètre intérieur de filet (D1) en direction du diamètre extérieur de filet (Dn), sachant que les espaces libres (10, 11, 12) terminent sur un diamètre de cercle extérieur (Da) à distance du diamètre extérieur de filet (Dn).

2. Écrou (13) selon la revendication 1, **caractérisé en ce que** les pas de filet présentent un diamètre de flanc de filet (D2) qui est situé entre le diamètre extérieur de filet (Dn) et le diamètre intérieur de filet (D1) et que le diamètre de cercle extérieur (Da) est inférieur au diamètre extérieur de filet (Dn) et au moins égal au diamètre de flanc de filet (D2).

3. Écrou (13) selon la revendication 1 ou 2, **caractérisé en ce que** les espaces libres (10, 11, 12) sont formés en tant qu'arc de cercle avec un rayon (Rv) et que le rayon (Rv) est inférieur à 35 % du diamètre intérieur de filet (D1) et en particulier inférieur à 25 % du diamètre intérieur de filet (D1), sachant que l'espace libre (10, 11, 12) présente un centre (4, 5, 6) qui est distant d'un centre (2) de l'avant-trou (3) d'au plus 75 % du diamètre intérieur de filet (D1).

4. Écrou (13) selon l'une des revendications 1 à 3, **caractérisé en ce que** la jonction d'un espace libre (10, 11, 12) vers le diamètre intérieur de filet (D1) s'effectue dans un angle de 120° à moins de 180°.

5. Écrou (13) selon l'une des revendications 1 à 4, **caractérisé en ce que** la part d'espaces libres (10, 11, 12) sur les pas de filet est située entre 20 % et 75 %.

6. Liaison vissée, comprenant au moins un écrou (13) selon la revendication 2 et une des revendications 3 à 5 et un boulon (21), **caractérisée en ce que** le diamètre (d2) du boulon (21) est supérieur au diamètre intérieur de filet (D1) et inférieur au diamètre de cercle extérieur (Da) de l'écrou et est en particulier égal au diamètre de flanc de filet (D2).

7. Liaison vissée selon la revendication 6, **caractérisée en ce que** le diamètre de cercle extérieur (Da) de l'écrou (13) est supérieur au diamètre (d2) du boulon (21).

8. Ébauche (1) destinée à la fabrication d'un écrou générant un filet (13) selon l'une des revendications 1 à 5, dans lequel l'écrou (13) à fabriquer est doté d'un filet (14) avec un diamètre intérieur de filet (D1) et un diamètre extérieur de filet (Dn), **caractérisée en ce que** l'ébauche présente un avant-trou (3) ayant un diamètre de cercle intérieur (Di) inférieur au diamètre intérieur de filet (D1) à fabriquer et que l'avant-trou (3) présente des espaces libres (10, 11, 12) élargissant l'avant-trou (3) depuis le diamètre de cercle intérieur (Di), sachant que les espaces libres (10, 11, 12) terminent sur un diamètre de cercle extérieur (Da) à distance du diamètre extérieur de filet (Dn) à fabriquer.

9. Ébauche selon la revendication 8, **caractérisée en ce que** les espaces libres (10, 11, 12) sont distants l'un de l'autre.
